# EUROPEAN PATENT APPLICATION

(11) **EP 0 644 364 A1**
(43) Date of publication of application: **22.03.1995**
(21) Application number: 94306906.2
(22) Date of filing: 21.09.1994
(51) Int. Cl.: F16L 11/08

(54) **Filamentary members**

(30) Priority: 22.09.1993 GB 9319545
(71) Applicant: STRUCTURAL POLYMER SYSTEMS Ltd., Cowes, Isle of Wight PO31 7EU (GB)
(72) Inventor: Whiley, David Anthony, Shrewsbury, Shropshire, SY3 7NF (GB); Ness, Derek, Nr Brighstone, Isle of Wight, PO30 5PN (GB)
(74) Representative: Lomas, Geoffrey Michael

(57) **Abstract**

With reference to Figure 1, a filamentary member in the form of flexible tubing 1 is provided with longitudinal stiffening comprising a helical reinforcement rib 2 wound over the external surface 3 of the tubing 1 and anchored to the surface 3 at longitudinally spaced intervals, each of which extends between anchor points A, E, are at the extremities of one complete turn of a helical winding. The rib 2 is free to move, relative to the external surface 3, except at anchor points A, E.

Winding of the rib 2 takes places around the central axis 4 of the tubing 1.

Should bending of the tubing 1 take place, around a winding drum, (not shown), as indicated by arrow 5, the net increase in the rib path length ABC on the tube surface 3 on the outside of the bend is equal to the reduction in the rib path length CDE on the inside of the bend. Consequently, the rib path length ABCDE is the same in both the bent and unbent conditions of the tubing 1.

With reference to Figure 2, in the bent condition, mid-point C of the rib winding is displaced relative to mid-point C₁ on the surface 3 of the tubing 1, by distance 6. Similarly, but by small amounts 7 and 8, points B and D on the rib winding are displaced relative to points B₁ and D₁ on the surface 3.

In the situation illustrated by Figure 2, the external surface 3 of the tubing 1 is strained due to bending. However, longitudinal strain in the stiffening rib 2 is substantially zero everywhere, regardless of the radius of the bend or tubing diameter.

In order to substantially prevent the tubing 1 from twisting under longitudinal loads, a second helically wound reinforcement rib may be provided, wound in the opposite direction to rib 2.

## Description

This invention relates to filamentary members, and is primarily, but not exclusively, concerned with filamentary members of tubular form, hereinafter "tubing".

Offshore oil and gas rigs make use of steel tubing wound on drums, and disposed in vertically extending boreholes.

The drums are of small (less than 2.0 m) diameter in order to reduce the overall size of a winding unit when the tubing thereof is wound up. Combined requirements for high longitudinal strength and stiffness coupled with the need to wind tubing on small diameter drums create a problem.

As tubing bending loads are substantial, only a limited number of winding and unwinding operations is possible due to fatigue damage caused by bending the tubing past their yield points.

It is an object of the present invention to at least alleviate these problems.

According to the present invention, a filamentary member, (such as tubing) is provided with longitudinal stiffening comprising at least one helical reinforcement rib wound over the external surface of the member and anchored to said surface at longitudinally spaced intervals.

Preferably at least one more helical reinforcement ribs may be wound over the external surface of the filamentary member, in a direction opposite to the winding of the first-mentioned rib, and anchored to said first-mentioned rib at longitudinally spaced intervals.

A plurality of ribs may be provided, some of which may be contiguously disposed.

The filamentary member may be of composite form.

An embodiment of the invention will now be described by way of example only, with reference to the accompanying drawings, wherein:-
Figures 1 to 4 are fragmentary side views of tubing which illustrate the principle of the invention; and
Figure 5 is a fragmentary side view in perspective of a preferred form of the invention.

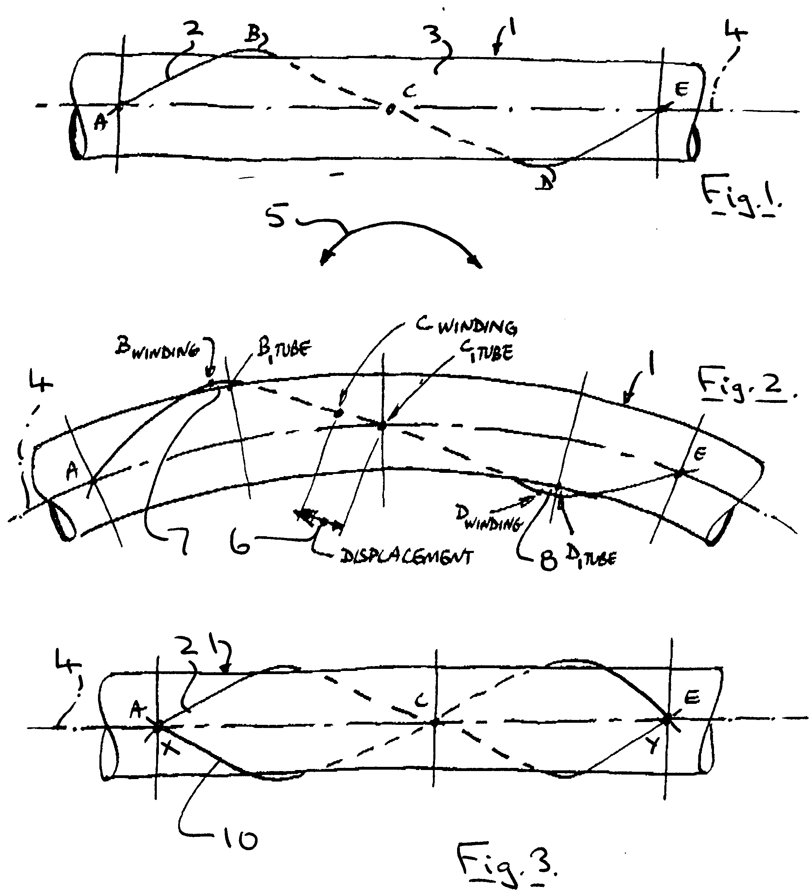

Figure 1 shows a filamentary member in the form of flexible tubing 1 provided with longitudinal stiffening comprising a helical reinforcement rib 2 wound over the external surface 3 of the tubing 1 and anchored to the surface 3 at longitudinally spaced intervals, each of which extends between anchor points A, E.

The anchor points A, E, are at the extremities of one complete turn of a helical winding. The rib 2 is free to move, relative to the external surface 3, except at anchor points A, E.

Winding of the rib 2 takes places around the central axis 4 of the tubing 1.

When bending of the tubing 1 takes place, around a winding drum, (not shown), and as indicated by arrow 5, the net increase in the rib path length ABC on the tube surface 3 on the outside of the bend is equal to the reduction in the rib path length CDE on the inside of the bend. Consequently, the rib path length ABCDE is the same in both the bent and unbent conditions of the tubing 1.

With reference to Figure 2, in the bent condition, mid-point C of the rib winding is displaced relative to mid-point C₁ on the surface 3 of the tubing 1, by distance 6. Similarly, but by small amounts 7 and 8, points B and D on the rib winding are displaced relative to points B₁ and D₁ on the surface 3.

In the situation illustrated by Figure 2, the external surface 3 of the tubing 1 is strained due to bending. However, longitudinal strain in the stiffening rib 2 is substantially zero everywhere, regardless of the radius of the bend or tubing diameter.

With reference to Figure 3, in order to substantially prevent the tubing from twisting under longitudinal loads, a second helically wound reinforcement rib may be provided, namely rib 10.

In this arrangement, rib 10 is wound in the opposite direction to rib 2. The rib 10 is fixed at anchor points X, Y aligned with anchor points A, E of Figures 1 and 2, but disposed on the rib 2. As in the case of the rib 2, the rib 10 is free to move, relative to the tubing external surface 3, (and also relative to rib 2 thereon), between its anchor points.

The use of a separating film allows the ribs 2 and 10 to move relative to each other. Alternatively, the ribs can be allowed to slide over one another.

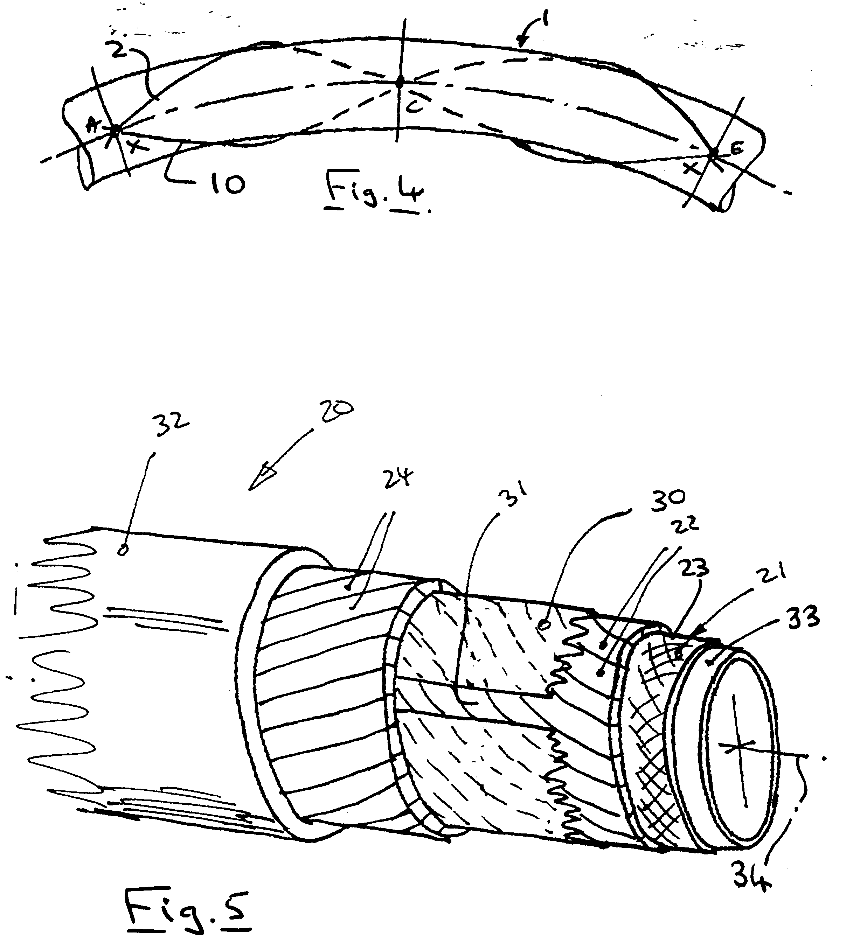

Figure 4 illustrates the tubing 2 of Figure 3 in a bent condition.

Figure 5 illustrates a preferred form of the invention, comprising a tubing assembly 20 for offshore borewell use. The assembly 20 is formed by flexible tubing 21 provided with longitudinal stiffening comprising a first group of helical reinforcement ribs 22 wound over the external surface 23 of the tubing 21.

The ribs 22, which are contiguously disposed, are anchored to the external surface 23 at longitudinally spaced intervals, at the extremities of one complete turn of a helical winding, in the manner described above. The ribs 22 are anchored by bonding material.

The longitudinal stiffening also comprise a second group of helical reinforcement ribs 24 wound over the external surfaces of the ribs 22, and in a direction opposite to the winding of the ribs 22. The ribs 24 are anchored to the ribs 22 they superimpose, by bonding material, at points corresponding to point C of Figure 3.

A separating film 30 is used to coat the ribs 22. A longitudinal gap 31 in the film 30 allows the ribs 24 and 22 to be bonded together, at the points corresponding to point C of Figure 3. The film 30 acts as a lubricant to allow relative sliding movement between the ribs 22, 24 in non-anchored regions.

A suitable separating film material 30 comprises polyester (eg Mylar), polyethylene or polytetrafluoroethylene (eg Teflon).

The tubing assembly 20 is provided with an outer sheath 32 which is a close-fit on the ribs 24. The tubing 21 comprises a hoop wound tube which is a close fit on an inner sheath 33. The tubing assembly 20 has a central, longitudinal, axis 34. The inner sheath 33 is of material which is resistant to chemical attack and provides a seal against leakage.

The diameter of the outer sheath 32 is 2 inches (50.80 mm). Winding angle of ribs 22 (and 24) to the axis 34 is 6°2'. Distance corresponding to AE of Figure 4 is 58.10 inches (14.75 cm).

The tubing assembly 20 is of composite construction, using carbon or other fibre reinforcement. The ribs 22, 24 support the weight of the tubing assembly 20 when it is hanging vertically and because they are only anchored at longitudinally spaced intervals, they allow the assembly 20 to be coiled on a drum when not in use.

The tubing assembly 20 is intended to resist an internal pressure of 6000 lbs per square inch and an external pressure of 4000 lbs per square inch. It is also intended to resist end loads of 30,000 lbs per square inch tension and 15,000 lbs per square inch compression.

The tensile end loads in the ribs 22 and 24 cause radial pressures acting inwardly on the tube 21.

A hoop wound (or braided) tube 21 is used within the ribs 22, 24 to react against the radial pressures as the tensile end loads are greater than the compressive end loads.

Outwardly acting radial pressure from a compressive end loading applied to the ribs 22, 24 is resisted by the outer sheath 32, which also provides a smooth outer surface for sealing.

## Claims

1. A filamentary member characterised in that it is provided with longitudinal stiffening comprising at least one helical reinforcement rib (2) wound over the external surface (3) of the member (1) and anchored to said surface at longitudinally spaced intervals (A, E).

2. A filamentary member as claimed in claim 1 wherein the reinforcement rib (2) is anchored at the extremities of one complete turn of winding.

3. A filamentary member as claimed in claim 1 or 2 provided with at least one more helical reinforcement rib (10) wound over the external surface (3) of the filamentary member (1), in a direction opposite to said first-mentioned rib (2).

4. A filamentary member as claimed in claim 2 or 3, wherein said second-mentioned rib (10) is anchored to said first-mentioned rib at longitudinally-spaced intervals (X, Y).

5. A filamentary member as claimed in claim 4, wherein the second-mentioned rib (10) is anchored to said first-mentioned rib (2) at the extremities of one complete turn of winding of said second-mentioned rib.

6. A filamentary member as claimed in claim 3 or 4, provided with a separating film (corresponding to film 30) of lubricant which allows the first and second mentioned ribs (2, 10) to move relative to each other in non-anchored regions.

7. A filamentary member as claimed in any one of claims 1 to 6, which is of tubular form.

8. A filamentary member as claimed in any one of claims 1 to 7, which is of composite material construction.

9. A tubing assembly comprising a filamentary member of tubular form, characterised in that it is provided with longitudinal stiffening comprising a first group of helical reinforcement ribs (22) wound over the external surface (23) of the tubular member (21) and anchored to said surface at longitudinally-spaced intervals (corresponding to A, E), a second group of helical reinforcement ribs (24) wound over the external surfaces of the first group ribs (22) and in direction opposite to winding of the first group ribs (22) and anchored thereto at longitudinally-spaced intervals (corresponding to X, Y), a separating film (30) of lubricant disposed between the ribs (22) of the first group and the ribs (24) of the second group, so as to allow relative movement between these ribs in non-anchored regions, an outer sheath (32) enclosing the ribs (22, 24) of the first and second groups which is a close-fit on the ribs (24) of the second group, and an inner sheath (33) disposed in close-fitting relationship within the tubular member (21).

10. A tubing assembly as claimed in claim 9 wherein at least the ribs (22) of the first group are contiguously disposed.

11. A tubing assembly as claimed in claim 9 or 10, which is of composite material construction.

12. A tubular assembly as claimed in any one of claims 9 to 11, wherein the ribs (22, 24) of both the first and second groups are anchored at the extremities of one complete turn of their respective windings.
